# EUROPÄISCHE PATENTSCHRIFT

(11) **EP 3 676 126 B1**
(45) Veröffentlichungstag und Bekanntmachung des Hinweises auf die Patenterteilung: **19.04.2023**
(21) Anmeldenummer: 18762807.8
(22) Anmeldetag: 27.08.2018
(51) Int. Cl.: B60N 2/06, B60N 2/07, B60N 2/16

(54) **FAHRZEUGSITZ MIT EINEM SITZVERSTELLUNGSMECHANISMUS**
VEHICLE SEAT WITH A SEAT ADJUSTMENT MECHANISM
SIÈGE DE VÉHICULE AVEC UN MÉCANISME DE RÉGLAGE DE SIÈGE

(30) Priorität: 28.08.2017 DE 102017215001
(43) Veröffentlichungstag der Anmeldung: 08.07.2020
(73) Patentinhaber: KEIPER Seating Mechanisms Co., Ltd., Shanghai, 201315 (CN)
(72) Erfinder: SUBRAMANIAN, Karthikeyan Maharajapuram, 51381 Leverkusen (DE)
(74) Vertreter: Kutzenberger Wolff & Partner
(86) Internationale Anmeldenummer: PCT/EP2018/072972
(87) Internationale Veröffentlichungsnummer: WO 2019/042914

(56) Entgegenhaltungen:
- DE-A1- 3 130 444
- DE-A1- 3 143 122
- JP-U- H0 675 868
- US-A1- 2007 295 882
- US-A1- 2015 352 983

## Beschreibung

Die Erfindung betrifft einen Fahrzeugsitz mit einem Sitzverstellungsmechanismus.

Als Stand der Technik sind Sitzverstellungsmechanismen für Fahrzeugsitze sowie Fahrzeugsitze bekannt. Mit einem bekannten Sitzverstellungsmechanismus für einen Fahrzeugsitz ist dessen Position in Längsrichtung, also in x-Richtung, verstellbar. Dazu weist der Fahrzeugsitz eine erste Anzahl von Schienenpaaren, in der Regel zwei Schienenpaare, auf. Jedes Schienenpaar umfasst eine obere Schiene und eine untere Schiene.

Aus DE 31 43 122 A1 ist ein in Kraftfahrzeugen anzuordnender Sitz mit Führungsschienenanordnungen und einer Stellschienenanordnung bekannt.

Aus US 2015/0352983 A1 ist ein Passagiersitz mit einer kompakten Sitzkinematik bekannt.

Aus DE 31 30 444 A1 ist ein Fahrzeugsitz mit gekrümmten Führungsschienen bekannt.

Aus JP H06 75868 U ist ein Fahrzeugsitz mit Führungsschienen bekannt.

Aufgabe der vorliegenden Erfindung ist es, einen verbesserten Fahrzeugsitz mit einem Sitzverstellungsmechanismus der eingangs genannten Art anzugeben.

Die Aufgabe wird mit einem Fahrzeugsitz mit einem Sitzverstellungsmechanismus mit den in Anspruch 1 angegebenen Merkmalen gelöst, und als Alternativen mit den jeweiligen Fahrzeugsitzen, die mit den Merkmalen der Ansprüche 9, 10 und 11 definiert sind.

Ein Fahrzeugsitz mit einem Sitzverstellungsmechanismus umfasst gemäß einer ersten Alternative eine Anzahl erster Schienenpaare, wobei jedes erste Schienenpaar eine obere Schiene und eine untere Schiene umfasst. Erfindungsgemäß ist zwischen der Anzahl erster Schienenpaare und einem Sitzteil des Fahrzeugsitzes ein Höhenverstellmechanismus angeordnet, der gemäß der ersten Alternative eine Anzahl zweiter Schienenpaare umfasst, wobei jedes zweite Schienenpaar eine obere Schiene und eine untere Schiene umfasst, wobei die Anzahl erster Schienenpaare und die Anzahl zweiter Schienenpaare gleichzeitig betätigbar sind.

Die mit dem Sitzverstellungsmechanismus gemäß der ersten Alternative erzielten Vorteile bestehen insbesondere darin, dass eine Verstellung der Position des Fahrzeugsitzes bei gleichzeitiger Betätigung der Anzahl von ersten Schienenpaaren und der Anzahl von zweiten Schienenpaaren besonders schnell erfolgen kann.

Mit dem Sitzverstellungsmechanismus ist es möglich, insbesondere die Zeit zum Positionieren eines Fahrzeugsitzes, insbesondere eines Fahrersitzes, aus einer Komfort-Position, welche beispielsweise während eines Fahrzustandes eines autonom fahrenden Fahrzeugs eingenommen ist, in eine Fahrposition gegenüber herkömmlichen Sitzverstellungsmechanismen deutlich zu verkürzen. Sofern es bei autonom fahrenden Fahrzeugen die Fahrsituation erfordert, ist dadurch der Fahrzeugsitz besonders schnell in Fahrposition bringbar, wodurch der Fahrer schneller wieder eine zum Führen geeignete Sitzposition einnehmen kann. Dadurch kann eine Sicherheit erhöht werden und eine Wahrscheinlichkeit eines Unfalls ist reduzierbar.

Ein Sitzverstellungsmechanismus für einen Fahrzeugsitz umfasst gemäß einer zweiten Alternative der Erfindung statt einer Anzahl erster Schienenpaare ein erstes Linearverstellsystem und statt einer Anzahl zweiter Schienenpaare ein zweites Linearverstellsystem. Das erste und das zweite Linearverstellsystem sind gleichzeitig betätigbar. Ein Linearverstellsystem umfasst eine Anzahl fester Teile, eine Anzahl beweglicher Teile und einen Spindelantrieb. Ausgestaltungen der zweiten Alternative der Erfindung sind strukturell gleich und/oder gleichwirkend mit vorgenannten Ausgestaltungen der ersten Alternative der Erfindung.

Ein Sitzverstellungsmechanismus für einen Fahrzeugsitz umfasst gemäß einer dritten Alternative eine Anzahl von Schienenpaaren und ein Linearverstellsystem. Die Anzahl von Schienenpaaren und das Linearverstellsystem sind gleichzeitig betätigbar. Das Linearsystem umfasst einen Spindelantrieb. Ausgestaltungen der dritten Alternative der Erfindung sind strukturell gleich und/oder gleichwirkend mit vorgenannten Ausgestaltungen der ersten Alternative der Erfindung.

Eine Ausgestaltung des Sitzverstellungsmechanismus sieht vor, dass die Anzahl erster Schienenpaare oder das erste Linearverstellsystem im Wesentlichen in einer Fahrzeuglängsrichtung für eine Sitzlängsverstellung angeordnet und betätigbar ist und dass die Anzahl zweiter Schienenpaare oder das zweite Linearverstellsystem anteilig in der Fahrzeuglängsrichtung und anteilig in einer Höhe für eine Sitzhöhenverstellung angeordnet und betätigbar ist. Das heißt, es ist ein Winkel der Anzahl zweiter Schienenpaare oder des zweiten Linearverstellsystems gegenüber der Anzahl erster Schienenpaare oder des ersten Linearverstellsystems vorgesehen, der weniger als 90° beträgt, sodass bei Betätigung des Höhenverstellmechanismus automatisch auch eine anteilige Längsverstellung des Sitzteil des Fahrzeugsitzes ermöglicht ist, die gleichzeitig mit Betätigung der Anzahl erster und/oder optionaler dritter Schienenpaare möglich ist, so dass ein noch schnelleres Positionieren des Fahrzeugsitzes, insbesondere eines Fahrersitzes, in Längsrichtung bei gleichzeitiger Sitzhöhenverstellung bei einfacher und kostengünstiger Bauweise möglich ist.

Der Sitzverstellungsmechanismus sieht eine Anzahl dritter Schienenpaare oder ein drittes Linearverstellsystem vor, welche oder welches eine im Wesentlichen gleiche Wirkrichtung wie die Anzahl erster Schienenpaare oder wie das erste Linearverstellsystem aufweist. Dadurch ist, insbesondere bei gleichzeitiger Betätigung aller Schienenpaare oder Linearverstellsysteme oder einer Kombination dieser, ein noch schnelleres Positionieren des Fahrzeugsitzes bei einfacher und kostengünstiger Bauweise möglich. Dadurch ist es beispielsweise möglich, die Zeit zum Positionieren eines Fahrzeugsitzes, insbesondere eines Fahrersitzes, in Längsrichtung, also in x-Richtung, aus einer Komfort-Position in eine Fahrposition gegenüber herkömmlichen Sitzverstellungsmechanismen deutlich zu verkürzen.

Eine weitere Ausgestaltung des Sitzverstellungsmechanismus sieht vor, dass obere Schienen der Anzahl erster Schienenpaare oder bewegliche Teile des ersten Linearverstellsystems unterseitig an wenigstens einer unteren Schiene der Anzahl zweiter Schienenpaare oder an einem festen Teil des zweiten Linearverstellsystems befestigt sind. Dadurch ist auf baulich einfache Weise eine besonders schnelle Sitzverstellung möglich.

Bevorzugt ist dabei vorgesehen, dass obere Schienen der Anzahl erster Schienenpaare oder bewegliche Teile des ersten Linearverstellsystems mittels eines ersten Verbindungselementes unterseitig an wenigstens einer unteren Schiene der Anzahl zweiter Schienenpaare oder am festen Teil des zweiten Linearverstellsystems befestigt sind. Dadurch ist auf baulich einfache und dennoch besonders stabile Weise eine schnelle Sitzverstellung möglich.

Eine weitere Ausgestaltung des Sitzverstellungs-mechanismus sieht vor, dass eine obere Schiene oder obere Schienen der Anzahl zweiter Schienenpaare oder eine Anzahl beweglicher Teile des zweiten Linearverstellsystems unterseitig an dem Sitzteil des Fahrzeugsitzes befestigt ist/sind. Dadurch ist auf baulich einfache und stabile Weise eine schnelle Sitzverstellung möglich.

Dabei erfolgt bevorzugt die Befestigung gemäß einer Alternative unmittelbar und gemäß einer anderen Alternative mittelbar mittels eines zweiten Verbindungselementes, wodurch eine besonders effektive und schnelle Sitzverstellung auf baulich einfache Weise möglich ist.

Eine weitere Ausgestaltung des Sitzverstellungs-mechanismus sieht vor, dass untere Schienen der Anzahl dritter Schienenpaare oder eine Anzahl fester Teile des dritten Linearverstellsystems am zweiten Verbindungselement befestigt sind und dass obere Schienen der Anzahl dritter Schienenpaare oder eine Anzahl beweglicher Teile des dritten Linearverstellsystems mit einem Sitzteilträger fest verbunden sind. Dadurch ist auf baulich einfache und stabile Weise eine ganz besonders schnelle Sitzverstellung möglich.

Eine weitere Ausgestaltung des Sitzverstellungs-mechanismus sieht einen ersten elektrischen Motor zum Antrieb und/oder einen zweiten elektrischen Motor zum Antrieb und/oder einen dritten elektrischen Motor zum Antrieb vor. Der erste elektrische Motor dient dem Antrieb der Anzahl erster Schienenpaare oder des ersten Linearverstellsystems. Der zweite elektrische Motor dient dem Antrieb der Anzahl zweiter Schienenpaare oder des zweiten Linearverstellsystems. Der dritte elektrische Motor dient dem Antrieb der Anzahl dritter Schienenpaare oder des dritten Linearverstellsystems.

Ausführungsbeispiele der Erfindung werden anhand von Zeichnungen näher erläutert. Dabei zeigen:
- Figur 1: schematisch in Seitenansicht einen Sitzverstellungsmechanismus für einen Fahrzeugsitz nach dem Stand der Technik,
- Figur 2: schematisch eine Seitenansicht einer ersten Ausführungsform eines erfindungsgemäßen Sitzverstellungsmechanismus,
- Figur 3: schematisch eine Seitenansicht einer zweiten Ausführungsform eines Sitzverstellungsmechanismus, die nicht Teil der Erfindung ist, und
- Fig. 4a, 4b: Diagramme von zeitabhängigen Längsverstellungen.

Einander entsprechende Teile sind in allen Figuren mit den gleichen Bezugszeichen versehen.

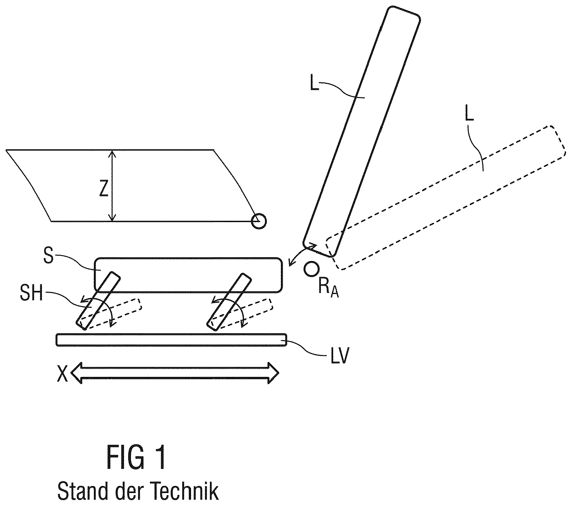

**Figur 1** zeigt schematisch in Seitenansicht einen Sitzverstellungsmechanismus für einen Fahrzeugsitz nach dem Stand der Technik. Der Fahrzeugsitz umfasst eine schwenkbare Lehne L und ein Sitzteil S. Der Sitzverstellungsmechanismus dient zur elektrischen Verstellung des Fahrzeugsitzes in Längsrichtung, also in x-Richtung, und in einer Höhe, welche mit Z gekennzeichnet ist. Zur Verstellung des Fahrzeugsitzes in Längsrichtung ist eine Längsverstellung LV angeordnet, die zwei bekannte Schienenpaare umfasst. Zur Höhenverstellung sind Schwenkhebel SH angeordnet.

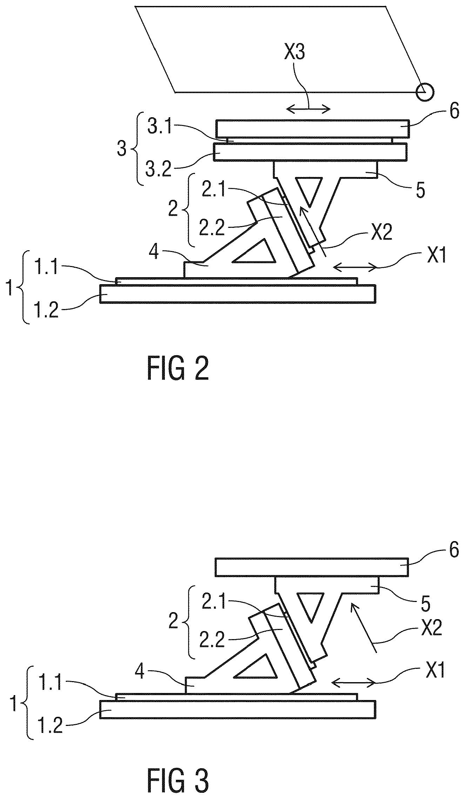

**Figur 2** zeigt schematisch einen Sitzverstellungsmechanismus zur elektrischen Verstellung eines Fahrzeugsitzes in Längsrichtung, also in x-Richtung, und zur Höhenverstellung. Zwei unten angeordnete erste Schienenpaare 1 umfassen je eine obere Schiene 1.1 und eine untere Schiene 1.2. Zwei schräg angeordnete zweite Schienenpaare 2 umfassen je eine obere Schiene 2.1 und eine untere Schiene 2.2. Die unteren Schienen 1.2 des ersten Schienenpaares 1 sind unterseitig an einem Fahrzeugboden befestigt.

Die oberen Schienen 1.1 der ersten Schienenpaare 1 sind mittelbar, nämlich mittels eines ersten Verbindungselements 4, an den unteren Schienen 2.2 der zweiten Schienenpaare 2 befestigt.

Oberhalb der zweiten Schienenpaare 2 sind zwei dritte Schienenpaare 3 angeordnet, welche jeweils eine obere Schiene 3.1 und eine untere Schiene 3.2 umfassen. Die unteren Schienen 3.2 der dritten Schienenpaare 3 sind mittelbar, nämlich mittels eines zweiten Verbindungselements 5, an den oberen Schienen 2.1 der zweiten Schienenpaare 2 befestigt.

Die ersten Schienenpaare 1 ermöglichen eine Verschiebung in der mit X1 gekennzeichneten Richtung, also in Fahrzeuglängsrichtung. Die zweiten Schienenpaare 2 ermöglichen eine Verschiebung in der mit X2 gekennzeichneten Richtung, also schräg nach oben. Die dritten Schienenpaare 3 ermöglichen eine Verschiebung in der mit X3 gekennzeichneten Richtung, also ebenfalls in Fahrzeuglängsrichtung.

Die oberen Schienen 1.1 der unten angeordneten ersten Schienenpaare 1 sind oberseitig mit dem ersten Verbindungselement 4 verbunden, beispielsweise geschraubt oder geschweißt.

Bei Betätigung der unten angeordneten ersten Schienenpaare 1 erfolgt eine Längsverstellung sowohl der Verbindungselemente 4, 5 als auch der daran befestigten zweiten und dritten Schienenpaare 2, 3 und damit eines Sitzteilträgers 6 gegenüber dem Fahrzeugboden. Der Sitzteilträger 6 ist an der Oberseite der oberen Schiene 3.1 des dritten Schienenpaares 3 befestigt, beispielsweise verschraubt oder verschweißt.

Bei Betätigung der schräg angeordneten zweiten Schienenpaare 2 erfolgt sowohl eine Längsverstellung als auch eine Höhenverstellung sowohl der dritten Schienenpaare 3 als auch des mittelbar daran befestigten Sitzteilträgers 6 gegenüber dem ersten Verbindungselement 4 und gegenüber dem Fahrzeugboden.

Werden das erste Schienenpaare 1 und das dritte Schienenpaar 3 gleichzeitig und in gleicher Wirkrichtung betätigt, erfolgt eine Längsverstellung in einer Geschwindigkeit, die der Summe der Differenzgeschwindigkeiten zwischen den Schienen 1.1, 1.2 einerseits und den Schienen 3.1, 3.2 andererseits entspricht. Zum Einstellen der Komfortstellung aus der Fahrstellung heraus und umgekehrt ist dabei die Längsverstellung des Fahrzeugsitzes besonders schnell möglich.

Besonders vorteilhaft ist dies, weil eine Längsverstellung des Fahrzeugsitzes besonders schnell aus der Komfortstellung in die Fahrstellung ermöglicht ist, wenn beispielsweise eine fahrsituationsbedingte Beendigung eines autonomen Fahrens und ein Übernehmen der Fahrzeugsteuerung durch einen Fahrer erforderlich ist.

Werden das erste Schienenpaare 1 und das zweite Schienenpaar 2 gleichzeitig und in zumindest anteilig gleicher Wirkrichtung betätigt, erfolgt eine Längsverstellung in einer Geschwindigkeit, die der Summe der Differenzgeschwindigkeiten zwischen den Schienen 1.1, 1.2 einerseits und einer Horizontalgeschwindigkeitskomponente den Schienen 2.1, 2.2 andererseits entspricht. Zum Einstellen der Komfortstellung aus der Fahrstellung heraus und umgekehrt ist dabei die Längsverstellung des Fahrzeugsitzes besonders schnell möglich.

Werden das dritte Schienenpaare 3 und das zweite Schienenpaar 2 gleichzeitig und in zumindest anteilig gleicher Wirkrichtung betätigt, erfolgt eine Längsverstellung in einer Geschwindigkeit, die der Summe der Differenzgeschwindigkeiten zwischen den Schienen 3.1, 3.2 einerseits und der Horizontalgeschwindigkeitskomponente den Schienen 2.1, 2.2 andererseits entspricht. Zum Einstellen der Komfortstellung aus der Fahrstellung heraus und umgekehrt ist dabei die Längsverstellung des Fahrzeugsitzes besonders schnell möglich.

Die Verbindungselemente 4, 5 sind winkelförmig und wie auch die Schienenpaare 1, 2, 3 ausreichend stabil, um auch bei einem Unfall eine ungewollte Deformation des Sitzes zumindest weitgehend zu vermeiden. **Figur 3** zeigt schematisch eine zweite Ausführungsform eines Sitzverstellungsmechanismus zur elektrischen Verstellung eines Fahrzeugsitzes in Längsrichtung und in der Höhe. Diese Ausführungsform, die nicht Teil der Erfindung ist, entspricht der in Figur 2 dargestellten Ausführungsform, weist aber kein drittes Schienenpaar 3 auf. Hier ist der Sitzteilträger 6 an den oberen Schienen 2.1 der zweiten Schienenpaare 2 befestigt. Bevorzugt ist die Unterseite des Sitzteilträgers 6 an den Oberseiten der oberen Schienen 2.1 der zweiten Schienenpaare 2 befestigt.

Werden das erste Schienenpaare 1 und das zweite Schienenpaar 2 gleichzeitig und in zumindest anteilig gleicher Wirkrichtung betätigt, erfolgt eine Längsverstellung in einer Geschwindigkeit, die der Summe der Differenzgeschwindigkeiten zwischen den Schienen 1.1, 1.2 einerseits und einer Horizontalgeschwindigkeitskomponente der Schienen 2.1, 2.2 andererseits entspricht. Zum Einstellen der Komfortstellung aus der Fahrstellung heraus und umgekehrt ist dabei die Längsverstellung des Fahrzeugsitzes besonders schnell möglich, wobei gleichzeitig eine Höhenverstellung erfolgt.

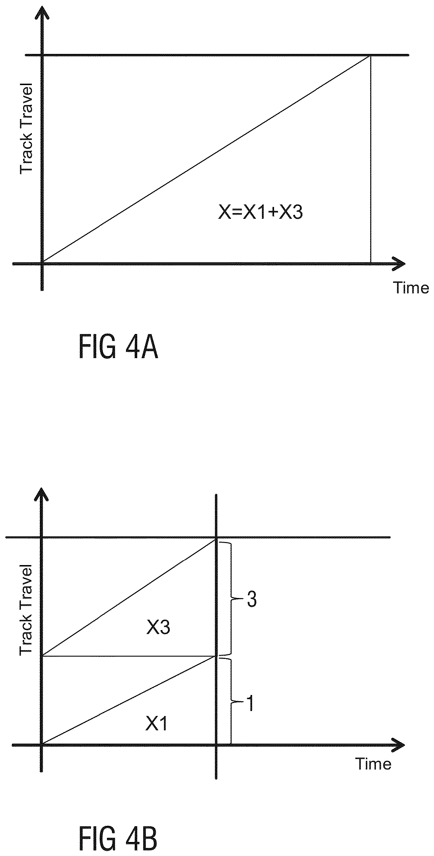

**Figur 4a** zeigt ein Diagramm mit einem zeitlichen Verlauf einer beispielsweise maximalen Längsverstellung eines Fahrzeugsitzes entweder allein durch Betätigung der ersten Schienenpaare 1 oder allein durch Betätigung der dritten Schienenpaare 3. Zum Erreichen einer bestimmten, beispielsweise maximalen Längsverstellung ist eine bestimmte Zeitdauer erforderlich.

**Figur 4b** zeigt ein Diagramm mit einem zeitlichen Verlauf einer beispielsweise maximalen Längsverstellung des Fahrzeugsitzes bei gleichzeitiger und in gleicher Wirkrichtung erfolgender Betätigung der ersten Schienenpaare 1 und der dritten Schienenpaare 3. Zum Erreichen einer bestimmten, beispielsweise maximalen Längsverstellung ist eine Zeitdauer erforderlich, die deutlich geringer ist als die in Figur 4a gezeigte.

### Bezugszeichenliste

- 1: erste Schienenpaare
1.1 obere Schiene eines ersten Schienenpaares
1.2 untere Schiene eines ersten Schienenpaares
- 2: zweite Schienenpaare
2.1 obere Schiene eines zweiten Schienenpaares
2.2 untere Schiene eines zweiten Schienenpaares
- 3: dritte Schienenpaare
3.1 obere Schiene eines dritten Schienenpaares
3.2 untere Schiene eines dritten Schienenpaares
- 4: erstes Verbindungselement
- 5: zweites Verbindungselement
- 6: Sitzteilträger

- S: Sitzteil
- L: Lehne
- LV: Längsverstellung
- SH: Schwenkhebel

## Patentansprüche

1. Fahrzeugsitz mit einem Sitzverstellungsmechanismus, umfassend eine Anzahl erster Schienenpaare (1), einen Höhenverstellmechanismus mit einer Anzahl zweiter Schienenpaare (2) und eine Anzahl dritter Schienenpaare (3), wobei jedes erste Schienenpaar (1) eine obere Schiene (1.1) und eine untere Schiene (1.2) umfasst,
wobei zwischen der Anzahl erster Schienenpaare (1) und einem Sitzteil (S) des Fahrzeugsitzes der Höhenverstellmechanismus angeordnet ist, wobei jedes zweite Schienenpaar (2) eine obere Schiene (2.1) und eine untere Schiene (2.2) umfasst, wobei die Anzahl erster Schienenpaare (1) und die Anzahl zweiter Schienenpaare (2) gleichzeitig betätigbar sind,
wobei die Anzahl dritter Schienenpaare (3) eine im Wesentlichen gleiche Wirkrichtung wie die Anzahl erster Schienenpaare (1) aufweist.

2. Fahrzeugsitz nach Anspruch 1,
**dadurch gekennzeichnet, dass**
- die Anzahl erster Schienenpaare (1) im Wesentlichen in einer Fahrzeuglängsrichtung für eine Sitzlängsverstellung angeordnet und betätigbar ist und
- dass die Anzahl zweiter Schienenpaare (2) anteilig in der Fahrzeuglängsrichtung und anteilig in einer Höhe für eine Sitzhöhenverstellung angeordnet und betätigbar ist.

3. Fahrzeugsitz nach Anspruch 1 oder 2,
**dadurch gekennzeichnet, dass** obere Schienen (1.1) der Anzahl erster Schienenpaare (1) unterseitig an wenigstens einer unteren Schiene (2.2) der Anzahl zweiter Schienenpaare (2) befestigt sind.

4. Fahrzeugsitz nach Anspruch 3,
**dadurch gekennzeichnet, dass** obere Schienen (1.1) der Anzahl erster Schienenpaare (1) mittels eines ersten Verbindungselementes (4) unterseitig an wenigstens einer unteren Schiene (2.2) der Anzahl zweiter Schienenpaare (2) befestigt sind.

5. Fahrzeugsitz nach einem der vorhergehenden Ansprüche,
**dadurch gekennzeichnet, dass** eine obere Schiene (2.1) oder obere Schienen (2.1) der Anzahl zweiter Schienenpaare (2) unterseitig an dem Sitzteil (S) des Fahrzeugsitzes befestigt ist/sind.

6. Fahrzeugsitz nach Anspruch 5,
**dadurch gekennzeichnet, dass** die Befestigung mittelbar mittels eines zweiten Verbindungselementes (5) erfolgt.

7. Fahrzeugsitz nach Anspruch 6,
**dadurch gekennzeichnet, dass** untere Schienen (3.2) der Anzahl dritter Schienenpaare (3) am zweiten Verbindungselement (5) befestigt sind und dass obere Schienen (3.1) der Anzahl dritter Schienenpaare (3) mit einem Sitzteilträger (6) fest verbunden sind.

8. Fahrzeugsitz nach einem der vorhergehenden Ansprüche,
**gekennzeichnet durch** einen ersten elektrischen Motor zum Antrieb der Anzahl erster Schienenpaare (1) und/oder einen zweiten elektrischen Motor zum Antrieb der Anzahl zweiter Schienenpaare (2) und/oder einen dritten elektrischen Motor zum Antrieb der Anzahl dritter Schienenpaare (3).

9. Fahrzeugsitz nach einem der vorhergehenden Ansprüche,
**dadurch gekennzeichnet, dass**
- statt einer Anzahl erster Schienenpaare (1), wobei jedes erste Schienenpaar (1) eine obere Schiene (1.1) und eine untere Schiene (1.2) umfasst
- ein erstes Linearverstellsystem vorgesehen ist, das eine Anzahl fester Teile und eine Anzahl beweglicher Teile und einen Spindelantrieb umfasst.

10. Fahrzeugsitz nach einem der vorhergehenden Ansprüche,
**dadurch gekennzeichnet, dass**
- statt einer Anzahl zweiter Schienenpaare (2), wobei jedes zweite Schienenpaar (2) eine obere Schiene (2.1) und eine untere Schiene (2.2) umfasst
- ein zweites Linearverstellsystem vorgesehen ist, das eine Anzahl fester Teile und eine Anzahl beweglicher Teile und einen Spindelantrieb umfasst.

11. Fahrzeugsitz nach einem der vorhergehenden Ansprüche,
**dadurch gekennzeichnet, dass**
- statt einer Anzahl dritter Schienenpaare (3), wobei jedes dritte Schienenpaar (3) eine obere Schiene (3.1) und eine untere Schiene (3.2) umfasst
- ein drittes Linearverstellsystem vorgesehen ist, das eine Anzahl fester Teile und eine Anzahl beweglicher Teile und einen Spindelantrieb umfasst.

## Claims

1. Vehicle seat having a seat adjustment mechanism, comprising a number of first rail pairs (1), a height adjustment mechanism comprising a number of second rail pairs (2) and a number of third rail pairs (3), wherein each first rail pair (1) comprises an upper rail (1.1) and a lower rail (1.2),
wherein the height adjustment mechanism is arranged between the number of first rail pairs (1) and a seat part (S) of the vehicle seat, wherein each second rail pair (2) comprises an upper rail (2.1) and a lower rail (2.2), wherein the number of first rail pairs (1) and the number of second rail pairs (2) can be actuated simultaneously,
wherein the number of third rail pairs (3) has a direction of action that is substantially the same as the number of first rail pairs (1).

2. Vehicle seat according to Claim 1,
**characterized in that**
- the number of first rail pairs (1) is arranged and can be actuated substantially in a vehicle longitudinal direction for a longitudinal adjustment of the seat, and
- **in that** the number of second rail pairs (2) is arranged and can be actuated proportionally in the vehicle longitudinal direction and proportionally in height for a seat height adjustment.

3. Vehicle seat according to Claim 1 or 2,
**characterized in that** upper rails (1.1) of the number of first rail pairs (1) are fixed to the underside of at least one lower rail (2.2) of the number of second rail pairs (2).

4. Vehicle seat according to Claim 3,
**characterized in that** upper rails (1.1) of the number of first rail pairs (1) are fixed by means of a first connecting element (4) to the underside of at least one lower rail (2.2) of the number of second rail pairs (2).

5. Vehicle seat according to one of the preceding claims,
**characterized in that** an upper rail (2.1) or upper rails (2.1) of the number of second rail pairs (2) is/are fixed to the underside of the seat part (S) of the vehicle seat.

6. Vehicle seat according to Claim 5,
**characterized in that** the fixing is carried out indirectly by means of a second connecting element (5).

7. Vehicle seat according to Claim 6,
**characterized in that** lower rails (3.2) of the number of third rail pairs (3) are fixed to the second connecting element (5), and **in that** upper rails (3.1) of the number of third rail pairs (3) are firmly connected to a seat part carrier (6).

8. Vehicle seat according to one of the preceding claims,
**characterized by** a first electric motor for driving the number of first rail pairs (1) and/or a second electric motor for driving the number of second rail pairs (2) and/or a third electric motor for driving the number of third rail pairs (3).

9. Vehicle seat according to one of the preceding claims,
**characterized in that**
- instead of a number of first rail pairs (1), each first rail pair (1) comprising an upper rail (1.1) and a lower rail (1.2),
- a first linear adjustment system is provided, which comprises a number of fixed parts and a number of movable parts and a spindle drive.

10. Vehicle seat according to one of the preceding claims,
**characterized in that**
- instead of a number of second rail pairs (2), each second rail pair (2) comprising an upper rail (2.1) and a lower rail (2.2),
- a second linear adjustment system is provided, which comprises a number of fixed parts and a number of movable parts and a spindle drive.

11. Vehicle seat according to one of the preceding claims,
**characterized in that**
- instead of a number of third rail pairs (3), each third rail pair (3) comprising an upper rail (3.1) and a lower rail (3.2),
- a third linear adjustment system is provided, which comprises a number of fixed parts and a number of movable parts and a spindle drive.

## Revendications

1. Siège de véhicule avec un mécanisme de réglage de siège, comprenant un nombre de premières paires de rails (1), un mécanisme de réglage de la hauteur avec un nombre de deuxièmes paires de rails (2) et un nombre de troisièmes paires de rails (3), chaque première paire de rails (1) comprenant un rail supérieur (1.1) et un rail inférieur (1.2),
le mécanisme de réglage de la hauteur étant agencé entre le nombre de premières paires de rails (1) et une partie d'assise (S) du siège de véhicule, chaque deuxième paire de rails (2) comprenant un rail supérieur (2.1) et un rail inférieur (2.2), le nombre de premières paires de rails (1) et le nombre de deuxièmes paires de rails (2) pouvant être actionnés simultanément,
le nombre de troisièmes paires de rails (3) présentant une direction d'action essentiellement identique à celle du nombre de premières paires de rails (1).

2. Siège de véhicule selon la revendication 1, **caractérisé en ce que**
- le nombre de premières paires de rails (1) est agencé et peut être actionné essentiellement dans une direction longitudinale du véhicule pour un réglage longitudinal du siège et
- **en ce que** le nombre de deuxièmes paires de rails (2) est agencé et peut être actionné proportionnellement dans la direction longitudinale du véhicule et proportionnellement dans une hauteur pour un réglage de la hauteur du siège.

3. Siège de véhicule selon la revendication 1 ou 2, **caractérisé en ce que** des rails supérieurs (1.1) du nombre de premières paires de rails (1) sont fixés sur le côté inférieur à au moins un rail inférieur (2.2) du nombre de deuxièmes paires de rails (2).

4. Siège de véhicule selon la revendication 3, **caractérisé en ce que** des rails supérieurs (1.1) du nombre de premières paires de rails (1) sont fixés au moyen d'un premier élément de liaison (4) sur le côté inférieur à au moins un rail inférieur (2.2) du nombre de deuxièmes paires de rails (2).

5. Siège de véhicule selon l'une quelconque des revendications précédentes, **caractérisé en ce qu'**un rail supérieur (2.1) ou des rails supérieurs (2.1) du nombre de deuxièmes paires de rails (2) est/sont fixé(s) sur le côté inférieur à la partie d'assise (S) du siège de véhicule.

6. Siège de véhicule selon la revendication 5, **caractérisé en ce que** la fixation est effectuée indirectement au moyen d'un deuxième élément de liaison (5) .

7. Siège de véhicule selon la revendication 6, **caractérisé en ce que** des rails inférieurs (3.2) du nombre de troisièmes paires de rails (3) sont fixés au deuxième élément de liaison (5) et **en ce que** des rails supérieurs (3.1) du nombre de troisièmes paires de rails (3) sont reliés de manière fixe à un support de partie d'assise (6) .

8. Siège de véhicule selon l'une quelconque des revendications précédentes, **caractérisé par** un premier moteur électrique pour entraîner le nombre de premières paires de rails (1) et/ou un deuxième moteur électrique pour entraîner le nombre de deuxièmes paires de rails (2) et/ou un troisième moteur électrique pour entraîner le nombre de troisièmes paires de rails (3).

9. Siège de véhicule selon l'une quelconque des revendications précédentes, **caractérisé en ce que**
- au lieu d'un nombre de premières paires de rails (1), chaque première paire de rails (1) comprenant un rail supérieur (1.1) et un rail inférieur (1.2),
- un premier système de réglage linéaire est prévu, qui comprend un nombre de parties fixes et un nombre de parties mobiles et un entraînement à broche.

10. Siège de véhicule selon l'une quelconque des revendications précédentes, **caractérisé en ce que**
- au lieu d'un nombre de deuxièmes paires de rails (2), chaque deuxième paire de rails (2) comprenant un rail supérieur (2.1) et un rail inférieur (2.2),
- un deuxième système de réglage linéaire est prévu, qui comprend un nombre de parties fixes et un nombre de parties mobiles et un entraînement à broche.

11. Siège de véhicule selon l'une quelconque des revendications précédentes, **caractérisé en ce que**
- au lieu d'un nombre de troisièmes paires de rails (3), chaque troisième paire de rails (3) comprenant un rail supérieur (3.1) et un rail inférieur (3.2),
- un troisième système de réglage linéaire est prévu, qui comprend un nombre de parties fixes et un nombre de parties mobiles et un entraînement à broche.
